# EUROPEAN PATENT APPLICATION

(11) **EP 4 093 039 A1**
(43) Date of publication of application: **23.11.2022**
(21) Application number: 21741584.3
(22) Date of filing: 13.01.2021
(51) Int. Cl.: H04N 21/433

(54) **VIDEO PLAYING METHOD AND APPARATUS**

(30) Priority: 17.01.2020 CN 202010055814
(71) Applicant: Beijing Dajia Internet Information Technology Co., Ltd., Beijing 100085 (CN)
(72) Inventor: CANG, Peng, Beijing 100085 (CN); LI, Jinhai, Beijing 100085 (CN); SHUAI, Longcheng, Beijing 100085 (CN); WANG, Tao, Beijing 100085 (CN); LIU, Yuxin, Beijing 100085 (CN); JIANG, Pengcheng, Beijing 100085 (CN)
(74) Representative: Angerhausen, Christoph
(86) International application number: PCT/CN2021/071543
(87) International publication number: WO 2021/143732

(57) **Abstract**

The present disclosure relates to a video playing method and apparatus. The method comprises: in response to a target video playing instruction, acquiring a first caching progress of a target video; when the first caching progress is less than or equal to a first preset threshold value, loading and presenting a first multimedia resource, wherein the first multimedia resource comprises a picture and/or an audio; and during the process of presenting the first multimedia resource, caching the target video. The method displays the image and/or audio to a user when the first caching progress is less than or equal to the first preset threshold value, and caches the target video during displaying.

## Description

### CROSS-REFERENCE TO RELATED APPLICATION

This application claims priority to Chinese Patent Application No. 202010055814.0, filed by BEIJING DAJIA INTERNET INFORMATION TECHNOLOGY CO., LTD. on January 17, 2020, and titled with "method and apparatus for video playing, electronic device and storage medium".

### TECHNICAL FIELD

The present disclosure relates to the technical field of video processing, and in particular, to a method and an apparatus for video playing.

### BACKGROUND

In the video field, a video playing function is a common function of a client-side video player or video playing application. The performance of video playing directly affects the viewer's experience of watching the video.

When the network condition is poor, or the content distribution network is under great pressure, abnormal conditions are very likely to occur when a user terminal plays the video, and the video playing may be not continuous.

### SUMMARY

The present disclosure provides a method and an apparatus for video playing. The technical solutions of the present disclosure are as follows.

According to a first aspect of embodiments of the present disclosure, a method for video playing is provided. The method includes:
in response to a playing instruction for a target video, obtaining a first cache progress of the target video;
when the first cache progress is less than or equal to a first preset threshold, loading and displaying a first multimedia resource, wherein the first multimedia resource includes a picture and/or an audio;
during displaying the first multimedia resource, caching the target video.

In an embodiment, the method further includes:
when the first cache progress being greater than the first preset threshold, loading and playing cached first video data in the target video;
in response to detecting that a video data interruption occurs when the first video data is being played, obtaining a video clip in the first video data before the video data interruption;
playing the video clip in a loop, and caching the target video.

In an embodiment, the method further includes:
when the first cache progress is greater than the first preset threshold, loading and playing cached first video data in the target video;
in response to detecting that a video parsing failure occurs when the first video data is being played, loading and displaying the first multimedia resource.

In an embodiment, when the first cache progress is less than or equal to the first preset threshold, loading and displaying the first multimedia resource includes:
when the first cache progress is less than or equal to the first preset threshold, loading and playing a picture and/or an audio pre-stored in a terminal.

In an embodiment, the picture includes a dynamic picture.

In an embodiment, before obtaining the first cache progress of the target video, the method further includes:
in response to the playing instruction for the target video, obtaining a second cache progress of a guide video;
when determining according to the second cache progress that caching the guide video has been completed, loading and playing the guide video;
during playing the guide video, caching the target video;
after playing the guide video is completed, obtaining the first cache progress of the target video.

In an embodiment, the method further includes:
when determining according to the second cache progress that caching the guide video has not been completed, and the second cache progress is greater than a second preset threshold, loading cached second video data in the guide video;
playing the second video data in a loop, and caching the target video;
in response to a total duration of cyclic playing of the second video data exceeding a playing duration of the guide video, obtaining the first cache progress of the target video.

According to a second aspect of embodiments of the present disclosure, an apparatus for video playing is provided. The apparatus includes:
a first progress obtaining unit, configured to, in response to a playing instruction for a target video, obtain a first cache progress of the target video;
a first resource displaying unit, configured to, when the first cache progress is less than or equal to a first preset threshold, load and display a first multimedia resource, wherein the first multimedia resource includes a picture and/or an audio;
a video caching unit, configured to, during displaying the first multimedia resource, cache the target video.

In an embodiment, the apparatus further includes:
a first video playing unit, configured to, when the first cache progress is greater than the first preset threshold, load and play cached first video data in the target video;
a first video clip obtaining unit, configured to, in response to detecting that a video data interruption occurs when the first video data is being played, obtain a video clip in the first video data before the video data interruption;
a first cyclic playing unit, configured to play the video clip in a loop, and cache the target video.

In an embodiment, the apparatus further includes:
a first video playing unit, configured to, when the first cache progress is greater than the first preset threshold, load and play cached first video data in the target video;
wherein the first resource displaying unit is further configured to, in response to detecting that a video parsing failure occurs when the first video data is being played, load and display the first multimedia resource.

In an embodiment, the first resource displaying unit is specifically configured to, when the first cache progress is less than or equal to the first preset threshold, load and play a picture and/or an audio pre-stored in a terminal.

In an embodiment, the picture includes a dynamic picture.

In an embodiment, the apparatus further includes:
a second progress obtaining unit, configured to, in response to the playing instruction for the target video, obtain a second cache progress of a guide video;
a guide video playing unit, configured to, when determining according to the second cache progress that caching the guide video has been completed, load and play the guide video;
wherein the video caching unit is further configured to, during playing the guide video, cache the target video;
wherein the first progress obtaining unit is specifically configured to, after playing the guide video is completed, obtain the first cache progress of the target video.

In an embodiment, the apparatus further includes:
a second video data loading unit, configured to, when determining according to the second cache progress that caching the guide video has not been completed, and the second cache progress is greater than a second preset threshold, load cached second video data in the guide video;
a second video data playing unit, configured to play the second video data in a loop, and cache the target video;
wherein the first progress obtaining unit is specifically configured to, in response to a total duration of cyclic playing of the second video data exceeding a playing duration of the guide video, obtain the first cache progress of the target video.

According to a third aspect of embodiments of the present disclosure, an electronic device is provided, including:
a processor; and
a memory, configured to store instructions executable by the processor,
wherein the processor is configured to execute the instructions, to implement the method for video playing according to any embodiment of the first aspect.

According to a fourth aspect of embodiments of the present disclosure, a storage medium is provided. When instructions in the storage medium are executed by a processor of an electronic device, the electronic device is enabled to implement the method for video playing according to any embodiment of the first aspect.

According to a fifth aspect of embodiments of the present disclosure, a computer program product is provided. The program product includes a computer program. The computer program is stored in a readable storage medium, and at least one processor of a device reads the computer program from the readable storage medium and execute the computer program, so that the device implements the method for video playing described in any embodiment of the first aspect.

When the first cache progress is less than or equal to the first preset threshold, the picture and/or audio is displayed to the user, and the target video is cached during the displaying. It can be understood that, compared with stopping playing or popping-up abnormal playing prompt information in the related art, the present disclosure enables a terminal screen to always have a picture or a sound playing, which can improve continuity of video playing and is beneficial to improving the playing effect.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure, and together with the description, serve to explain the principles of the present disclosure and do not unduly limit the present disclosure.
FIG. 1 is a schematic diagram of an application environment of a method for video playing according to an exemplary embodiment.
FIG. 2 is a flowchart of a method for video playing according to an exemplary embodiment.
FIG. 3 is a flowchart of playing a video clip in a loop when interruption occurs in video playing, according to an exemplary embodiment.
FIG. 4 is a flowchart of displaying a first multimedia resource when parsing failure occurs in video playing, according to an exemplary embodiment.
FIG. 5 is a flowchart illustrating a supplementary solution for adding a guide video according to an exemplary embodiment.
FIG. 6 is a block diagram of an apparatus for video playing according to an exemplary embodiment.
FIG. 7 is a schematic diagram of an electronic device according to an exemplary embodiment.

### DETAILED DESCRIPTION

In order to enable ordinary skilled in the art to better understand the technical solutions in this disclosure, the technical solutions in embodiments of this disclosure will be clearly and completely described in combination with the attached drawings below. All the embodiments of the present disclosure may be implemented independently or in combination with other embodiments, which are not limited in the present disclosure.

It should be noted that terms "first", "second", etc., in the specification and claims of the disclosure and in the appended drawings are used to distinguish similar objects and need not be used to describe a particular order or sequence. It should be understood that the data so used are interchangeable, where appropriate, so that embodiments of this disclosure described here may be implemented in a sequence other than those illustrated or described here. The implementations described in the following embodiments do not represent all implementations consistent with this disclosure. Rather, they are merely examples of devices and methods consistent with some aspects of this disclosure as detailed in the attached claims.

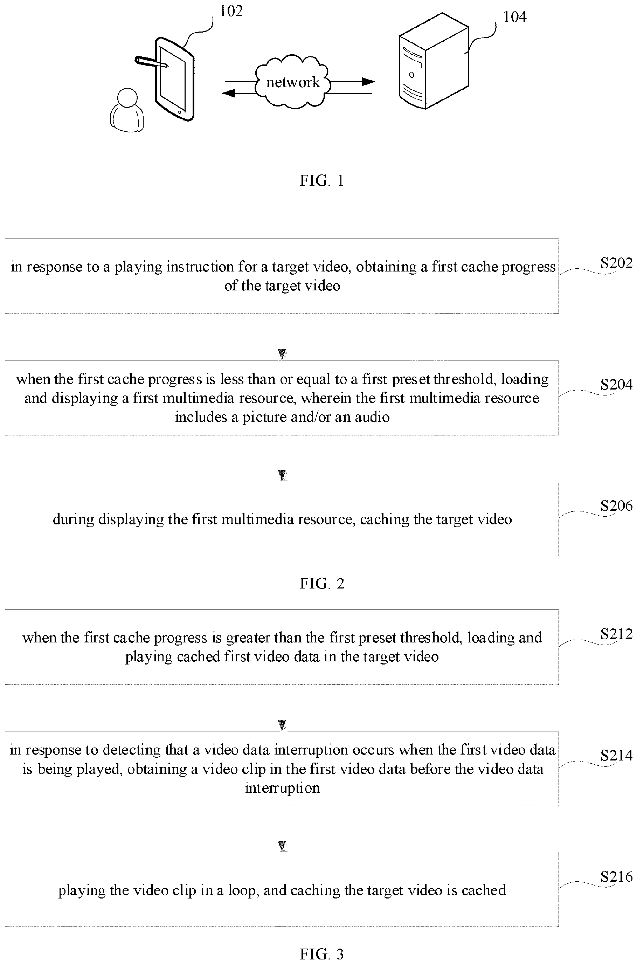

The method for video playing provided by the present disclosure can be applied to the application environment shown in FIG. 1. The terminal 102 interacts with the server 104 through the network. In embodiments of the present disclosure, when the terminal detects a playing request for a target video, the terminal sends the playing request to the server. The server returns target video data to the terminal in response to the playing request. Thus, the terminal can cache the target video data.

During the process of caching, the terminal obtains a first cache progress of the target video in response to a playing instruction for the target video, and loads and plays the corresponding first playing resource by comparing the first cache progress and a first preset threshold.

The terminal 102 may be, but is not limited to, various personal computers, notebook computers, smart phones, tablet computers and portable wearable devices, and the server 104 may be implemented by an independent server or a server cluster composed of multiple servers.

FIG. 2 is a flowchart of a method for video playing according to an exemplary embodiment. As shown in FIG. 2, the method for video playing is applied in the terminal 102, and includes the following steps.

In step S202, in response to a playing instruction for a target video, a first cache progress of the target video is obtained.

The first cache progress is configured to measure a size of cached data of the target video. The first cache progress may be a numerical value, such as a percentage or a data volume.

In embodiments of the present disclosure, when the terminal detects a playing request for the target video, the terminal sends the playing request to the server. The server returns the target video data to the terminal in response to the playing request. Thus, the terminal can cache the target video data. During the caching process, the terminal obtains the corresponding playing instruction for the target video, and obtains the first cache progress of the target video according to the playing instruction for the target video. In some embodiments of the present disclosure, the terminal acquires the first cache progress of the target video at preset intervals.

In step S204, when the first cache progress is less than or equal to a first preset threshold, a first multimedia resource is loaded and displayed.

The first multimedia resource includes a picture and/or an audio. The first preset threshold may be determined according to a performance of a playing device, or may be determined according to an empirical value.

In embodiments of the present disclosure, after obtaining the first cache progress, the terminal compares the first cache progress and the first preset threshold. In some embodiments of the present disclosure, the first preset threshold is 20%, of course, it can also be set to other values. When the first cache progress is less than or equal to the first preset threshold, the first multimedia resource is loaded and displayed.

In some embodiments of the present disclosure, the picture in the first multimedia resource may be a picture related to the target video, for example, related to content of the target video, then the picture may be a frame of image in the target video; for another example, related to a style of the target video. For example, if the target video plays an animation style, the picture may be an animation picture. Similarly, the audio in the first multimedia resource may also be audio related to the target video. Of course, the picture and audio may also be independent of the target video. As an implementation, when the first cache progress is less than or equal to the first preset threshold, the terminal loads and plays the picture and/or audio separated from the target video. In this implementation, the played picture and/or audio can improve the user's sense of participation. As another implementation, when the first cache progress is less than or equal to the first preset threshold, a picture and/or audio pre-stored in the terminal may be loaded and played.

In step S206, in the process of displaying the first multimedia resource, the target video is cached.

In embodiments of the present disclosure, during the process of displaying the first multimedia resource, the terminal caches the target video together, so as to achieve the purpose of caching while displaying.

In the above method for video playing, when the first cache progress is less than or equal to the first preset threshold, the picture and/or audio is displayed to the user, and the target video is cached during the displaying. It can be understood that, compared with stopping playing or popping-up abnormal playing prompt information in the related art, the present disclosure enables a terminal screen to always have a picture or a sound playing, which can improve continuity of video playing, help to improve the playing effect, and improve the user's viewing experience.

In some embodiments of the present disclosure, the picture may be a static picture or a dynamic picture. The use of dynamic picture can help improve the continuity of playing, and it is easier to attract the user's attention, which can effectively improve the user's viewing experience.

In an exemplary embodiment, referring to FIG. 3, the method further includes the following steps.

In step S212, when the first cache progress is greater than the first preset threshold, cached first video data in the target video is loaded and played.

In step S214, in response to detecting a video data interruption occurs when the first video data is being played, a video clip in the first video data before the video data interruption is obtained.

In step S216, the video clip is played in a loop, and the target video is cached.

In embodiments of the present disclosure, when the first cache progress is greater than the first preset threshold, the terminal creates a target video player, and loads and plays the cached first video data in the target video. During the playing of the first video data, in response to the terminal detecting that the video data interruption occurs in the first video data, the video clip in the first video data before the video data interruption is obtained. Since the video clip is the data before interruption and can be played normally, the terminal plays the video clip in a loop to improve playing continuity. In the process of playing the video clip in a loop, the target video is also cached. In some embodiments of the present disclosure, the above-mentioned video clip may be all or part of the first video data before the video data interruption.

In this embodiment, when a video freeze occurs due to video data interruption during playing of the target video, a method of cyclically playing the video that does not freeze is adopted to avoid the occurrence of freeze, thereby improving the continuity of video playing, which is beneficial to improve the playing effect.

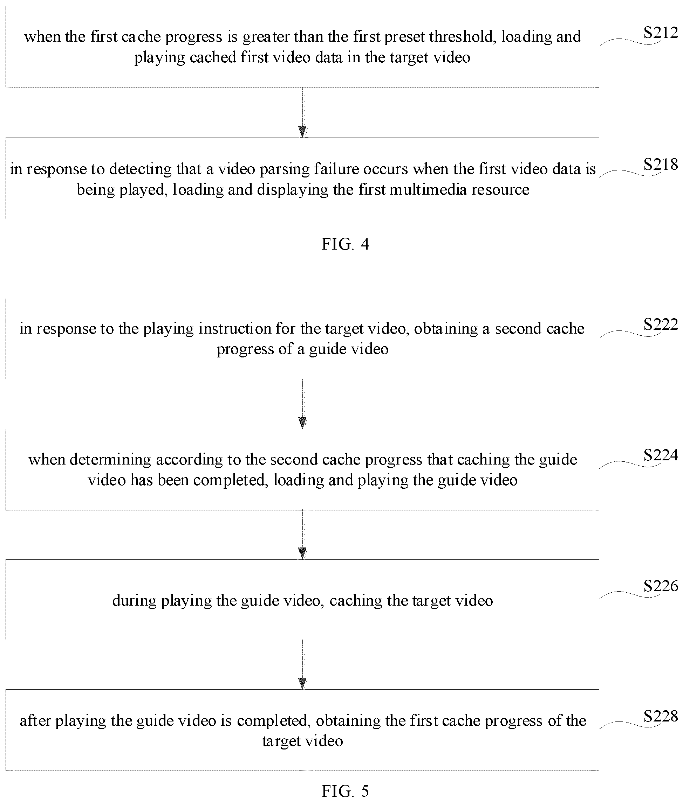

In an exemplary embodiment, referring to FIG. 4, the method includes the following steps.

In step S212, when the first cache progress is greater than the first preset threshold, the cached first video data in the target video is obtained.

In step S218, in response to detecting that a video parsing failure occurs when the first video data is being played, the first multimedia resource is loaded and displayed.

In embodiments of the present disclosure, when the first cache progress is greater than the first preset threshold, the terminal loads and plays the cached first video data in the target video. During the playing of the first video data, in response to the terminal detecting that the video parsing failure occurs in the first video data, the terminal loads and displays the first multimedia resource. In some embodiments of the present disclosure, when the terminal detects that the video parsing failure occurs during playing of the first video data, the terminal loads and plays the picture and/or audio separated from the target video.

In this embodiment, when a playing error occurs due to video parsing failure during the playing of the target video, in order to prevent the user from seeing only a black screen, the picture and/or audio are displayed to the user, so that there is always a picture on the terminal screen or there is sound playing, which can improve the continuity of video playing, which is beneficial to improve the playing effect and enhance the user's viewing experience.

In an exemplary embodiment, referring to FIG. 5, in step S202, before the step of obtaining the first cache progress of the target video, the following steps are further included.

In step S222, in response to the playing instruction for the target video, a second cache progress of a guide video is obtained.

In step S224, when determining according to the second cache progress that caching the guide video has been completed, the guide video is loaded and played.

In step S226, during the process of playing the guide video, the target video is cached.

In step S228, after playing the guide video is completed, the first cache progress of the target video is acquired.

The second cache progress is configured to measure a size of cached data of the guide video. The second cache progress may be a numerical value, such as a percentage or a data volume. The second preset threshold may be determined according to the performance of the playing device, or may be determined according to an empirical value. Generally, an amount of video data of the guide video is much less than that of the target video, so caching the guide video can be completed in a very short time. In some embodiments of the present disclosure, the guide video may be cached in parallel with the target video.

In embodiments of the present disclosure, after obtaining the playing instruction for the target video, the terminal obtains the second cache progress of the guide video according to the playing instruction. In some embodiments of the present disclosure, the terminal obtains the second cache progress of the guide video at preset intervals. Next, the terminal determines whether caching the guide video has been completed according to the second cache progress, for example, determines whether the cache percentage reaches 100%, and in response to reaching it, determines that caching the guide video has been completed, and at this time, can load and play the guide video. In the process of playing the guide video, the terminal continues to cache the target video, so that the target video obtains more time for caching, thereby increasing the proportion of the target video being played normally. After playing the guide video is completed, the terminal obtains the first cache progress of the target video.

In this embodiment, by introducing the guide video for the user to watch, on one hand, the smoothness and continuity of the playing can be increased, and on the other hand, the ratio of normal playing of the target video can be increased.

In an exemplary embodiment, the method further includes the following steps.

In step S225, when determining according to the second cache progress that caching the guide video has not been completed, and the second cache progress is greater than a second preset threshold, cached second video data in the guide video is loaded.

In step S227, the second video data is played in a loop, and the target video is cached.

In step S229, in response to a total duration of cyclic playing of the second video data exceeding a playing duration of the guide video, the first cache progress of the target video is obtained.

In embodiments of the present disclosure, as described above, for example, if the cache percentage does not reach 100%, it is determined that caching the guide video has not been cached. At this time, the terminal determines whether the second cache progress is greater than the second preset threshold, such as 60%, and when the second cache progress is greater than the second preset threshold, the terminal loads the cached second video data in the guide video, and then plays the second video data in a loop, and at the same time caches the target video. However, when the total duration of cyclic playing of the second video data exceeds the playing duration of the guide video, the terminal obtains the first cache progress of the target video. When the second cache progress is less than the second preset threshold, the picture and/or audios pre-stored in the terminal is loaded and played.

In some embodiments of the present disclosure, the above-mentioned picture may be a picture related to the guide video, for example, related to content of the guide video, then the picture may be a frame of image in the guide video; for another example, related to a style of the guide video. For example, if the guide video is played in an anime style, the picture can be an anime picture. Similarly, the above audio may also be audio related to the guide video. Of course, the picture and audios may also be independent of the guide video.

In this embodiment, when the caching of the guiding video is insufficient, the cached video data can be played in a loop, which can also increase the smoothness of video playing.

It should be understood that although the steps in the flowcharts of FIGS. 2-5 are shown in sequence according to the arrows, these steps are not necessarily executed in the sequence shown by the arrows. Unless explicitly stated herein, the execution of these steps is not strictly limited to the order, and these steps may be performed in other orders. Moreover, at least a part of the steps in FIGS. 2-5 may include multiple steps or multiple stages. These steps or stages are not necessarily executed and completed at the same time, but may be executed at different times. The execution order of these steps or stages is also not necessarily sequential, but may be performed alternately or in turn with other steps or at least a portion of the steps or phases within the other steps.

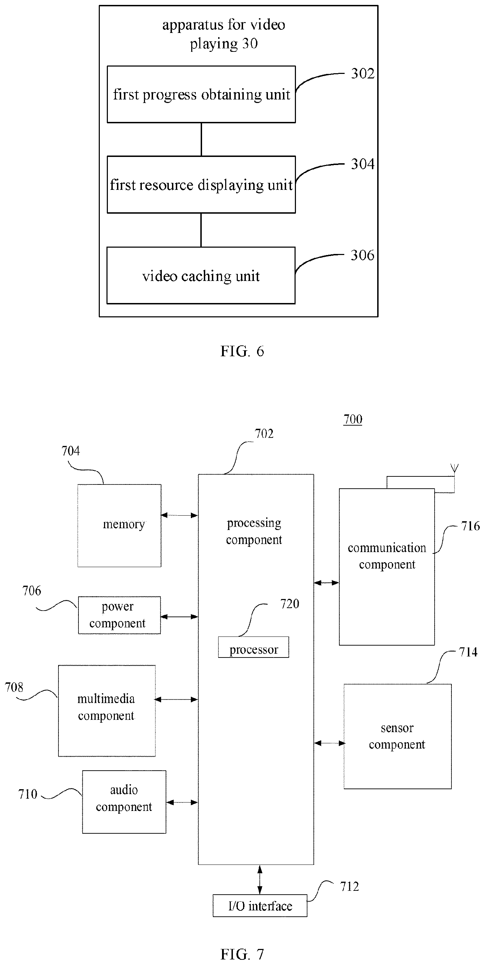

FIG. 6 is a block diagram of a data processing apparatus according to an exemplary embodiment. Referring to FIG. 6, the apparatus includes a first progress obtaining unit 302, a first resource displaying unit 304 and a video caching unit 306.

The first progress obtaining unit 302 is configured to, in response to a playing instruction for a target video, obtain a first cache progress of the target video.

The first resource displaying unit 304 is configured to, when the first cache progress is less than or equal to a first preset threshold, load and display a first multimedia resource, wherein the first multimedia resource includes a picture and/or an audio.

The video caching unit 306 is configured to, during displaying the first multimedia resource, cache the target video.

In the above apparatus for video playing, when the first cache progress is less than or equal to the first preset threshold, the picture and/or audio is displayed to the user, and the target video is cached during the displaying. It can be understood that, compared with stopping playing or popping-up abnormal playing prompt information in the related art, the present disclosure enables the terminal screen to always have a picture or a sound playing, which can improve the continuity of video playing and help improve the playing effect.

In an exemplary embodiment, the apparatus further includes:
a first video playing unit, configured to, when the first cache progress is greater than the first preset threshold, load and play cached first video data in the target video;
a first video clip obtaining unit, configured to, in response to detecting that a video data interruption occurs when the first video data is being played, obtain a video clip in the first video data before the video data interruption;
a first cyclic playing unit, configured to play the video clip in a loop, and cache the target video.

In an exemplary embodiment, the apparatus further includes:
a first video playing unit, configured to, when the first cache progress is greater than the first preset threshold, load and play cached first video data in the target video.

The first resource displaying unit is further configured to, in response to detecting that a video parsing failure occurs when the first video data is being played, load and display the first multimedia resource.

In an exemplary embodiment, the first resource displaying unit 304 is specifically configured to, when the first cache progress is less than or equal to the first preset threshold, load and play a picture and/or an audio pre-stored in a terminal.

In an exemplary embodiment, the picture includes a dynamic picture.

In an exemplary embodiment, the apparatus further includes:
a second progress obtaining unit, configured to, in response to the playing instruction for the target video, obtain a second cache progress of a guide video; and
a guide video playing unit, configured to, when determining according to the second cache progress that caching the guide video has been completed, load and play the guide video.

The video caching unit 306 is further configured to, during playing the guide video, cache the target video.

The first progress obtaining unit 302 is specifically configured to, after playing the guide video is completed, obtain the first cache progress of the target video.

In an exemplary embodiment, the apparatus further includes:
a second video data loading unit, configured to, when determining according to the second cache progress that caching the guide video has not been completed, and the second cache progress is greater than a second preset threshold, load cached second video data in the guide video;
a second video data playing unit, configured to play the second video data in a loop, and cache the target video.

The first progress obtaining unit 302 is specifically configured to, in response to a total duration of cyclic playing of the second video data exceeding a playing duration of the guide video, obtain the first cache progress of the target video.

Regarding the apparatus in the above embodiments, the specific manner in which each module performs the operation has been described in detail in the embodiments of the method, and will not be described in detail here.

FIG. 7 is a block diagram illustrating a device 700 for implement the method for video playing according to an example embodiment. As illustrated in FIG. 7, the device 700 may be a computer, a mobile phone, a digital broadcasting terminal, a messaging transceiver, a game console, a tablet device, a medical equipment, a fitness equipment, a personal digital assistant, etc.

Referring to FIG. 7, the device 700 may include one or more of the following components: a processing component 702, a memory 704, a power component 706, a multimedia component 708, an audio component 710, an input/ output (I/O) interface 712, a sensor component 714 and a communication component 716.

The processing component 702 typically controls overall operations of the device 700, such as the operations associated with display, data communications, telephone call, camera operations, and recording operations. The processing component 702 may include one or more processors 720 to execute instructions so as to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, videos, etc. The memory 704 may be implemented using any type of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 708 includes a front camera and/or a rear camera. The front camera and/or the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input an audio signal. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an opened/closed status of the device 700, relative positioning of components (e.g., the display and the keypad) of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate wired or wireless communication between the device 700 and other apparatus. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 704 including instructions, and the instructions are executable by the processor 720 of the device 700, for performing the above-described methods. For example, the non-transitory computer-readable storage medium may be a ROM, a RAM (random access memory), a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for video playing, comprising:
in response to a playing instruction for a target video, obtaining a first cache progress of the target video;
when the first cache progress is less than or equal to a first preset threshold, loading and displaying a first multimedia resource, wherein the first multimedia resource comprises a picture and/or an audio; and
during displaying the first multimedia resource, caching the target video.

2. The method according to claim 1, further comprising:
when the first cache progress is greater than the first preset threshold, loading and playing cached first video data in the target video; and
in response to detecting that a video data interruption occurs when the first video data is being played, obtaining a video clip in the first video data before the video data interruption;
playing the video clip in a loop, and caching the target video.

3. The method according to claim 1 or 2, further comprising:
when the first cache progress is greater than the first preset threshold, loading and playing cached first video data in the target video; and
in response to detecting that a video parsing failure occurs when the first video data is being played, loading and displaying the first multimedia resource.

4. The method according to any one of claims 1-3, wherein, when the first cache progress is less than or equal to the first preset threshold, loading and displaying the first multimedia resource comprises:
when the first cache progress is less than or equal to the first preset threshold, loading and playing a picture and/or an audio pre-stored in a terminal.

5. The method according to claim 1 or 4, wherein the picture comprises a dynamic picture.

6. The method according to any one of claims 1-5, wherein, before obtaining the first cache progress of the target video, further comprising:
in response to the playing instruction for the target video, obtaining a second cache progress of a guide video;
when determining that caching the guide video has been completed according to the second cache progress, loading and playing the guide video;
during playing the guide video, caching the target video; and
after playing the guide video is completed, obtaining the first cache progress of the target video.

7. The method according to claim 6, further comprising:
when determining according to the second cache progress that caching the guide video has not been completed, and the second cache progress is greater than a second preset threshold, loading cached second video data in the guide video;
playing the second video data in a loop, and caching the target video; and
in response to a total duration of cyclic playing of the second video data exceeding a playing duration of the guide video, obtaining the first cache progress of the target video.

8. An apparatus for video playing, comprising:
a first progress obtaining unit, configured to, in response to a playing instruction for a target video, obtain a first cache progress of the target video;
a first resource displaying unit, configured to, when the first cache progress is less than or equal to a first preset threshold, load and display a first multimedia resource, wherein the first multimedia resource comprises a picture and/or an audio; and
a video caching unit, configured to, during displaying the first multimedia resource, cache the target video.

9. The apparatus according to claim 8, further comprising:
a first video playing unit, configured to, when the first cache progress is greater than the first preset threshold, load and play cached first video data in the target video; and
a first video clip obtaining unit, configured to, in response to detecting that a video data interruption occurs when the first video data is being played, obtain a video clip in the first video data before the video data interruption; and
a first cyclic playing unit, configured to play the video clip in a loop, and cache the target video.

10. The apparatus according to claim 8 or 9, further comprising:
a first video playing unit, configured to, when the first cache progress is greater than the first preset threshold, load and play cached first video data in the target video;
wherein the first resource displaying unit is further configured to, in response to detecting that a video parsing failure occurs when the first video data is being played, load and display the first multimedia resource.

11. The apparatus according to any one of claims 8-10, wherein, the first resource displaying unit is specifically configured to, when the first cache progress is less than or equal to the first preset threshold, load and play a picture and/or an audio pre-stored in a terminal.

12. The apparatus according to claim 8 or 11, wherein the picture comprises a dynamic pi cture.

13. The apparatus according to any one of claims 9-12, further comprising:
a second progress obtaining unit, configured to, in response to the playing instruction for the target video, obtain a second cache progress of a guide video;
a guide video playing unit, configured to, when determining that caching the guide video has been completed according to the second cache progress, load and play the guide video;
wherein the video caching unit is further configured to, during playing the guide video, cache the target video;
wherein the first progress obtaining unit is specifically configured to, after playing the guide video is completed, obtain the first cache progress of the target video.

14. The apparatus according to claim 13, further comprising:
a second video data loading unit, configured to, when determining according to the second cache progress that caching the guide video has not been completed, and the second cache progress is greater than a second preset threshold, load cached second video data in the guide video;
a second video data playing unit, configured to play the second video data in a loop, and cache the target video;
wherein the first progress obtaining unit is specifically configured to, in response to a total duration of cyclic playing of the second video data exceeding a playing duration of the guide video, obtain the first cache progress of the target video.

15. An electronic device, comprising:
a processor; and
a memory, configured to store instructions executable by the processor,
wherein the processor is configured to execute the instructions, to implement the method for video playing according to any of claims 1 to 7.

16. A storage medium, wherein when instructions in the storage medium are executed by a processor of an electronic device, the electronic device is enabled to implement the method for video playing according to any of claims 1 to 7.
